# EUROPEAN PATENT SPECIFICATION

(11) **EP 2 346 110 B1**
(45) Date of publication and mention of the grant of the patent: **30.01.2013**
(21) Application number: 10177072.5
(22) Date of filing: 16.09.2010
(51) Int. Cl.: H01M 2/26, H01M 2/30, H01M 10/04

(54) **Recharcheable battery**
Wiederaufladbare Batterie
Batterie rechargeable

(30) Priority: 12.01.2010 US 294380 P; 15.07.2010 US 837212
(43) Date of publication of application: 20.07.2011
(73) Proprietor: SB LiMotive Co., Ltd., Giheung-gu Yongin-si, Gyeonggi-do 446-711 (KR)
(72) Inventor: Byun, Sang-Won, 446-711, Gyeonggi-do (KR); Kim, Yong-Sam, 446-711, Gyeonggi-do (KR); Yoo, Seok-Yoon, 446-711, Gyeonggi-do (KR); Choi, Young-Bong, 446-711, Gyeonggi-do (KR); Park, Sang-Jin, 446-711, Gyeonggi-do (KR)
(74) Representative: Gulde Hengelhaupt Ziebig & Schneider

(56) References cited:
- WO-A2-2009/013592
- FR-A1- 2 625 372
- GB-A- 1 503 954
- JP-A- 2004 273 178
- JP-A- 2006 228 551
- KR-A- 20060 060 806
- US-A1- 2006 051 664
- US-A1- 2007 009 793

## Description

### BACKGROUND OF THE INVENTION

### (a) Field of the Invention

The present invention relates to a rechargeable battery and, more particularly, to a rechargeable battery with an improved current collecting lead tab.

### (b) Description of the Related Art

Unlike a primary battery, which is not available for being rechargeable, a rechargeable battery can be recharged and discharged. A low-capacity rechargeable battery is used for small portable electronic devices such as mobile phones, notebook computers, or camcorders, while a large-capacity rechargeable battery is used as a motor-driving power source.

Recently, a high-output rechargeable battery using a non-aqueous electrolyte of high energy density is being developed, and a plurality of high-output rechargeable batteries are connected in series to constitute a large-capacity battery module so as to be used for driving a motor of a device, e.g., an electric automobile or the like, that requires much power.

Also, a single high-output rechargeable battery generally includes a plurality of rechargeable batteries connected in series, and such rechargeable batteries may have a cylindrical type, a prismatic type, and the like.

The prismatic rechargeable battery may include a terminal electrically connected with an electrode assembly enclosed in a case via a current collecting lead tab and protruded from an outer surface of the case.

When a plurality of electrode assemblies is inserted in a single case, the current collecting lead tab needs to be inserted between the electrode assemblies. In this case, however, a space between uncoated regions is so small that it is damaged while the current collecting lead tab is being inserted. Also, if the current collecting lead tab is attached only to some electrode assemblies, the flow path of current is lengthened to increase resistance and generate much heat.

The closest prior art is represented by US 6 051 664.

### SUMMARY OF THE INVENTION

The present invention has been made in an effort to provide a rechargeable battery having advantages of being easily installed and stably fixed with electrode assemblies.

According to an aspect of the present invention, a rechargeable battery is disclosed, the rechargeable battery comprising: a plurality of electrode assemblies; a case adapted for accommodating the plurality of electrode assemblies; at least one electrode terminal being electrically connected to the plurality of electrode assemblies by a lead tab, the lead tab comprising: a terminal junction part; at least one electrode assembly junction pair comprising a first electrode assembly junction part and a second electrode assembly junction part; each of the electrode assembly junction parts being electrically connected to the terminal junction part; wherein each of the electrode assembly junction parts comprises a bar portion and a bent portion; wherein the bar portion comprises a planar surface extending from a first end which faces towards the terminal junction part to a second end which faces away from the terminal junction part, wherein the planar surface of the bar portion of the first electrode assembly junction part is arranged parallel to the planar surface of the bar portion of the second electrode assembly junction part, wherein the bent portion is connected to the second end of the bar portion and the bent portion of the first electrode assembly junction part protrudes towards the second electrode assembly junction part and the bent portion of the second electrode assembly junction part protrudes towards the first electrode assembly junction part.

An advantage of the bent portion of the present invention is that damaging of the uncoated regions can be avoided when the lead tab is inserted.

Preferably the bent portion comprises a planar surface which allows a less complex design. Alternatively it is possible that the bent portion comprises a curved surface. Preferably the electrode assembly junction part further comprises an insertion tip, the insertion tip being connected to the bent portion and facing away from the terminal junction part. Preferably the insertion tip comprises a planar surface which is arranged parallel to the planar surface of the bar portion.

Preferably the lead tab (rechargeable battery) further comprises a single electrode assembly junction part comprising a bar portion and a bent portion; wherein the bar portion of the single electrode assembly junction part comprises a planar surface extending from a first end which faces towards the terminal junction part to a second end which faces away from the terminal junction part, and wherein the bent portion of the single electrode assembly junction part is connected to the second end of the bar portion of the single electrode assembly junction part and the distance between the bar portion of the single electrode assembly junction part and the bar portion of an adjacent electrode assembly junction part is greater than the distance between the bar portions of the at least one electrode assembly junction pair. Preferably the planar surface of the single electrode assembly junction part is arranged parallel to the planar surfaces of the bar portions of the at least one electrode assembly junction pair.

Preferably each of the electrode assembly junction parts comprises a longish stripe-like shape. Preferably at least one of the bent portions comprises a planar surface, the planar surface of the at least one bent portion being inclined with respect to the planar surface of the corresponding bar portion, wherein an angle of inclination ranges between 15° and 45°. Preferably the terminal junction part comprises a terminal through hole. Preferably the lead tab (rechargeable battery) further comprises a connection plate extending from an edge of the terminal junction part towards the electrode assembly junction parts. Preferably at least one electrode assembly junction pair comprises a branch portion being connected to and extending from the connection plate to side portions of the connection plate in a direction extending parallel to the edge of the terminal junction part. Preferably the distance from the first end of the bar portion to the second end of the bar portion is greater than a maximum extension of the bent portion. Preferably the distance from the first end of the bar portion to the second end of the bar portion is greater than a maximum extension of the insertion tip.

Preferably a maximum extension of the bent portion is smaller than a maximum extension of the insertion tip. Preferably the planar surface of the first electrode assembly junction part is arranged parallel to the planar surface of the second electrode assembly junction part. Preferably the planar surface of the single electrode assembly junction part is arranged parallel to the planar surfaces of the bar portions of the at least one electrode assembly junction pair.

Preferably each of the plurality of electrode assemblies comprises a first electrode, a second electrode and a separator disposed between the first electrode and the second electrode, each of the first electrode and the second electrode comprising a coated region with an active material and an uncoated region which is not coated with an active material, wherein the electrode assembly junction parts of a first lead tab are directly connected to the uncoated region of the first electrode of the electrode assemblies and the electrode assembly junction parts of a second lead tab are directly connected to the uncoated region of the second electrode of the electrode assemblies. Preferably the electrode assembly junction parts of the at least one lead tab are welded to the corresponding uncoated region of the electrode assemblies. Preferably the terminal junction part is directly connected to the at least one electrode terminal.

A minimum distance between adjacent bent portions is preferably greater than 1 mm. A minimum distance between adjacent insertion tips is preferably greater than 1 mm. Preferably the bar portions have a sufficient rigidity so as to be firmly fixed to the uncoated regions. Preferably, the Young's modulus of the bar portions (at 20° C) is greater than 10 kN/mm², more preferably greater than 30 kN/mm², more preferably greater than 70 kN/mm², more preferably greater than 130 kN/mm² and still more preferably greater than 200 kN/mm².

Another exemplary embodiment of the present invention provides a rechargeable battery including: a cap assembly including a cap assembly including a plurality of electrode assemblies, a case for accommodating the electrode assemblies therein, and terminals coupled to the case and electrically connected with the electrode assemblies, wherein the terminals are electrically connected with the plurality of electrode assemblies through a current collecting lead tab, the current collecting lead tab includes a terminal junction part fixed to the terminals and a plurality of electrode assembly junction parts formed to extend from a lower end of the terminal junction part, and each of the plurality of electrode assembly junction parts includes a welded bar fixed to the electrode assemblies through welding and a bent bar formed below the welded bar and sloped to an outer side of the electrode assemblies with respect to the welded bar.

According to another exemplary embodiment of the present invention, a bent bar is formed to allow a current collecting lead tab to be easily installed between electrode assemblies without being interfered with by an uncoated region.

### BRIEF DESCRIPTION OF THE DRAWINGS

FIG. 1 is a perspective view of a rechargeable battery according to a first exemplary embodiment of the present invention.
FIG. 2 is a sectional view taken along line II-II in FIG. 1.
FIG. 3 is a perspective view of a current collecting lead tab according to the first exemplary embodiment of the present invention.
FIG. 4 is a side view showing a state that the current collecting lead tab is attached to electrode assemblies according to the first exemplary embodiment of the present invention.
FIG. 5 is a perspective view of a current collecting lead tab according to a second exemplary embodiment of the present invention.
FIG. 6 is a side view showing a state that the current collecting lead tab is attached to electrode assemblies according to the second exemplary embodiment of the present invention.
FIG. 7 is a side view showing a state that a current collecting lead tab is installed at electrode assemblies according to a third exemplary embodiment of the present invention.
FIG. 8 is a side view showing a state that a current collecting lead tab is installed at electrode assemblies according to a fourth exemplary embodiment of the present invention.

### [Description of Reference Numerals Indicating Primary Elements in the Drawings]

- 100:: rechargeable battery
- 10:: electrode assembly
- 11:: positive electrode
- 12:: negative electrode
- 13:: separator
- 20:: cap assembly
- 21:: positive terminal
- 22:: negative terminal
- 21 a, 22a:: flange
- 21 b, 22b:: lower protrusion
- 30:: cap plate
- 34:: case
- 40:: negative electrode current collecting lead tab
- 50:: positive current collecting lead tab
- 51:: terminal junction part
- 51a:: terminal hole
- 52:: connection plate
- 53:: the first electrode assembly junction part
- 53a:: welded bar
- 53b:: bent bar
- 53c:: insertion tip
- 54:: the second electrode assembly junction part
- 56:: branch portion

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The same reference numerals will be used throughout to designate the same or like components.

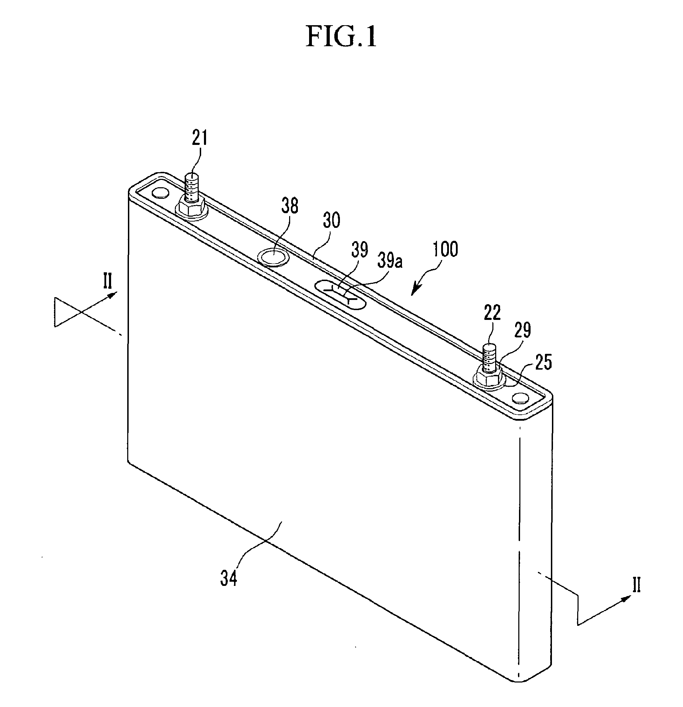

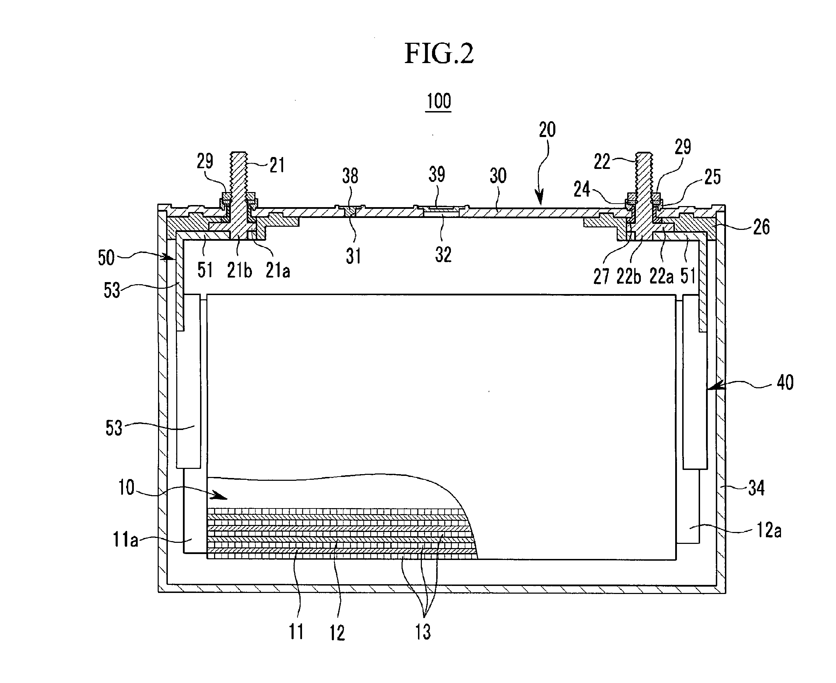

FIG. 1 is a perspective view of a rechargeable battery according to a first exemplary embodiment of the present invention, and FIG. 2 is a sectional view taken along line II-II in FIG. 1.

With reference to Figs. 1 and 2, a rechargeable battery 100 according to the first exemplary embodiment of the present invention includes a plurality of electrode assemblies 10 wound with a positive electrode 11 and a negative electrode 12 with a separator 13 interposed therebetween, a case 34 accommodating the electrode assemblies 10 therein, and a cap assembly 20 coupled to an opening of the case 34.

In the first exemplary embodiment, for example, the rechargeable battery 100 is a lithium ion rechargeable battery in a square shape. However, without being limited thereto, the present invention may be applicable to various types of batteries such as a lithium polymer battery, a cylindrical battery, and the like.

The positive electrode 11 and the negative electrode 12 include a coated region, i.e., a region formed by coating an active material on a current collector formed as a metal foil and uncoated regions 11 a and 12a of the current collector where an active material is not coated. The positive electrode uncoated region 11 a is formed at one side end of the positive electrode 11 along a lengthwise direction of the positive electrode 11, and the negative electrode uncoated region 12a is formed at another side end of the negative electrode 12 along a lengthwise direction of the negative electrode 12. The positive electrode 11 and the negative electrode 12 are wound with the separator 13, an insulator, interposed therebetween.

However, the present invention is not meant to be limited thereto, and the electrode assemblies 10 may have a structure in which positive and negative electrodes each made up of a plurality of sheets are alternately stacked with a separator interposed therebetween. In the case 34, two electrode assemblies 10 are disposed side by side and electrically connected with terminals 21 and 22. However, the present invention is limited thereto, and a plurality of electrode assemblies 10 may be installed.

The case 34 forms an overall outer appearance of the rechargeable battery 100, and may be made of a conductive metal such as aluminum, an aluminum alloy, or nickel-plated steel. Also, the case 34 provides a space in which the electrode assemblies 10 are installed. For example, the case 34 may have a rectangular parallelepiped shape (namely, in a cuboid shape) having an opening formed at one side thereof in order to accommodate (or receive) the electrode assemblies 10 having a shape corresponding to a rectangular parallelepiped. The opening points upward from the case 34 illustrated in FIGs. 1 and 2.

The cap assembly 20 includes a cap plate 30 covering the opening of the case 34, a positive terminal 21 outwardly protruded from the cap plate 30 and electrically connected with the positive electrode 11, and a negative terminal 22 outwardly protruded from the cap plate 30 and electrically connected with the negative electrode 12.

The cap plate 30 is formed as a thin plate, and coupled to the opening of the case 34. A sealing stopper 38 is installed at an electrolyte injection opening 31 of the cap plate 32, and a vent member 39 with a notch 39a is installed at a vent hole 32 such that it can be open at a pre-set pressure.

The positive terminal 21 and the negative terminal 22 are installed to penetrate the cap plate 30, flanges 21 a and 22a are formed to be supported at a lower portion of the positive terminal 21 and the negative terminal 22, respectively, under the cap plate 30, and outer circumferential surfaces of the upper columns protruded to the outer side of the cap plate 30 are threaded. Nuts 29, supporting from an upper side, are fastened to the terminals 21 and 22. Washers 24 for buffering the fastening force of the nuts 29 are installed below the nuts 29.

In the present exemplary embodiment, the terminals 21 and 22 are fixed by the nuts 29, but the present invention is not limited thereto and the terminals 21 and 22 may have a rivet structure or may be fixed through welding.

A lower gasket 27 and an upper gasket 25 are installed between the terminals 21 and 22 and the cap plate 30. The lower gasket 27 is positioned between the flanges 21 and 22 and the cap plate 30, and the upper gasket 25 is positioned between the cap plate 30 and the washer 24.

A positive current collecting lead tab 50 bonded through welding to a positive uncoated region 11 a is attached to the positive terminal 21, and a negative current collecting lead tab 40 bonded through welding to the negative uncoated region 12a is attached to the negative terminal 22. The positive current collecting lead tab 50 is attached to the positive uncoated regions 11 a of the two electrode assemblies 10, and the negative current collecting lead tab 40 is also attached through welding to the negative uncoated regions 12a of the two electrode assemblies 10.

Lower protrusions 21 b and 22b are formed under the flanges 21 a and 22a, and the current collecting lead tabs 40 and 50 are fixed to the lower protrusions 21 b and 22b through welding. However, the present invention is not limited thereto and the terminals and the current collecting lead tab may be integrally formed.

A lower insulating member 26 is installed between the terminals 21 and 22 and the cap plate 30, and upper ends of the current collecting lead tabs 40 and 50 and the flanges 21 a and 22a of the terminals 21 and 22 are inserted and positioned in the recesses formed on the lower insulating member 26.

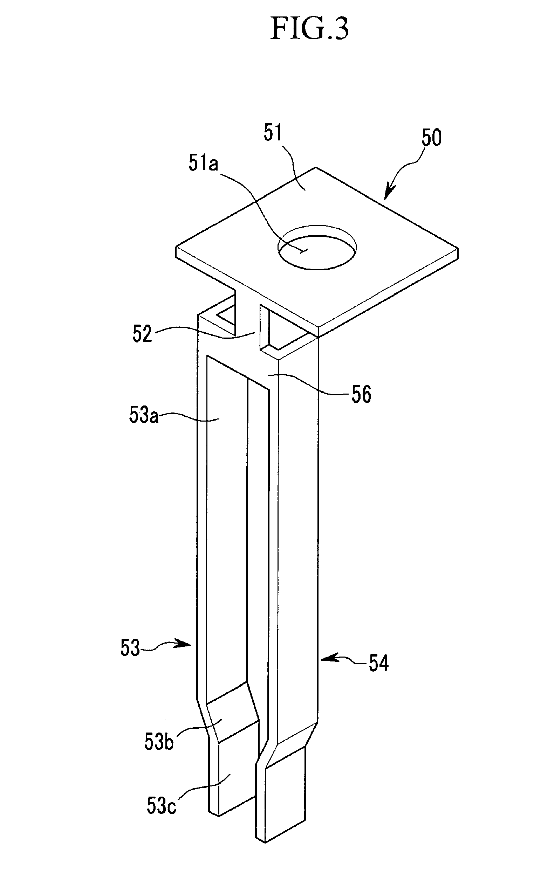

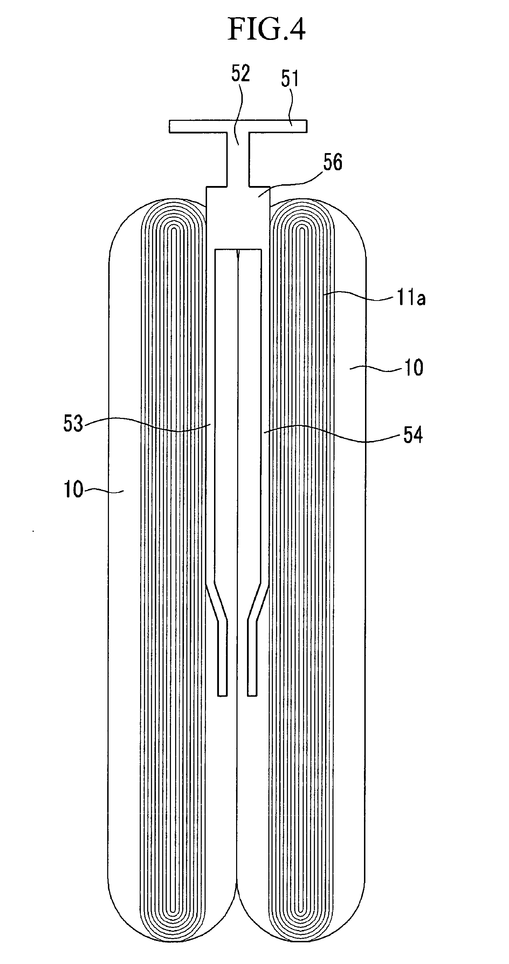

FIG. 3 is a perspective view of a current collecting lead tab according to the first exemplary embodiment of the present invention, and FIG. 4 is a side view showing a state that the current collecting lead tab is attached to electrode assemblies according to the first exemplary embodiment of the present invention.

The current collecting lead tabs will now be described in detail with reference to Figs. 3 and 4.

The negative current collecting lead tab 40 has the same structure as that of the positive current collecting lead tab 50, so a description of the positive current collecting lead tab 50 will replace that of the negative current collecting lead tab 40.

The positive current collecting tab 50 includes a terminal junction part 51 fixed to the terminal and a plurality of electrode assembly junction parts 53 and 54 formed to downwardly extend from the terminal junction part 51 and inserted between the electrode assemblies 10.

A connection plate 52 is formed between the terminal junction part 51 and the electrode assembly junction parts 53 and 54, which is downwardly continued from the terminal junction part 51. The electrode assembly junction parts 53 and 54 extend from the connection plate 52 toward the bottom of the case 34, and include a first electrode assembly junction part 53 attached through welding to the positive uncoated region 11a of one electrode assembly and a second electrode assembly junction part 54 attached through welding to the positive uncoated portion of another electrode assembly.

A terminal hole 51a is formed at the terminal junction part 51, into which the lower protrusion 21 b of the positive terminal is inserted. The terminal hole 51 a is bonded to a lower portion of the positive terminal 21 through welding. The connection plate 52 is formed to be bent downwardly at a right angle from the terminal junction part 51. A branch portion 56 is formed to extend to an outer side of the connection plate 52 under the connection plate 56. Namely, the branch portion 56 is formed to extend to the outer side further than the both side ends of the connection plate 52 under the connection plate 56. The first electrode assembly junction part 53 and the second electrode assembly junction part 54 are formed at both side ends of the branch portion 56. The first and second electrode assembly junction parts 53 and 54 have a rectangular bar shape and are bent from the connection plate 52 at a right angle toward the center of the electrode assemblies 10. Accordingly, the first and second electrode assembly junction parts 53 and 54 are parallel to flat faces of the electrode assemblies 10, and are formed to be parallel to each other.

Because the first and second electrode assembly junction parts 53 and 54 are formed to be bent, they are disposed to be parallel to the positive uncoated region 11 a so as to be bonded to the positive uncoated region 11 a through ultrasonic welding.

The two electrode assemblies are disposed to overlap with each other, and the positive uncoated regions 11a are disposed at one end of the electrode assemblies 10 and the negative uncoated regions 12a are disposed at the other end of the electrode assemblies 10. The positive uncoated regions 11 a are formed to have a thickness smaller than that of coated regions with an active material coated thereon, forming a space between the positive uncoated regions 11a. The electrode assembly junction parts 53 and 54 are inserted and installed in the space.

The first electrode assembly junction part 53 has the same structure as that of the second electrode assembly junction part 54, so a description of the first electrode assembly junction part 53 will replace that of the second electrode assembly junction part 54.

The first electrode assembly junction part 53 includes a welded bar 53a installed to be fixed to the branch portion 56, a bent bar 53b bent to an outer side of the electrode assembly, and an insertion tip 53c formed at the end of the bent bar 53b. The bent bar 53b may be formed to be sloped from the welded bar 53a toward the outer side from the center of the electrode assembly 10 where the welded bar 53a is attached, and in this case, the bent bar 53b may be formed to be sloped at 5 degrees to 90 degrees. The insertion tip 53c is formed at the end of the bent portion 53b and separated from the positive uncoated region 11 a. Accordingly, the space between the two facing insertion tips is smaller than that between the facing welded bars.

In this case, the insertion tip 53c is positioned at an inner side than the boundary between the electrode assemblies 10, so the facing insertion tips 53c are not in contact with each other.

Thus, when the positive current collecting lead tab 50 is inserted between the electrode assemblies 10, the insertion tips 53c are inserted in a state of being separated from the positive uncoated region 11 a. Thus, the current collecting lead tab 50 can be easily inserted without damaging the positive uncoated region 11 a. In addition, although the welded bar 53a is designed to be tightly attached to the positive uncoated region 11a, pressurizing the positive uncoated region 11a, because the insertion tip 53c is inserted in the state of being separated from the positive uncoated region 11 a, the current collecting lead tab 50 can be easily inserted. In this manner, because the positive current collecting lead tab 53 is installed such that the welded bar 53c pressurizes the positive uncoated region 11 a, the welded bar 53a and the positive uncoated region 11 a are tightly attached to prevent the occurrence of a defective contact between the positive current collecting lead tab 53 and the positive uncoated region 11 a due to an external impact or vibration.

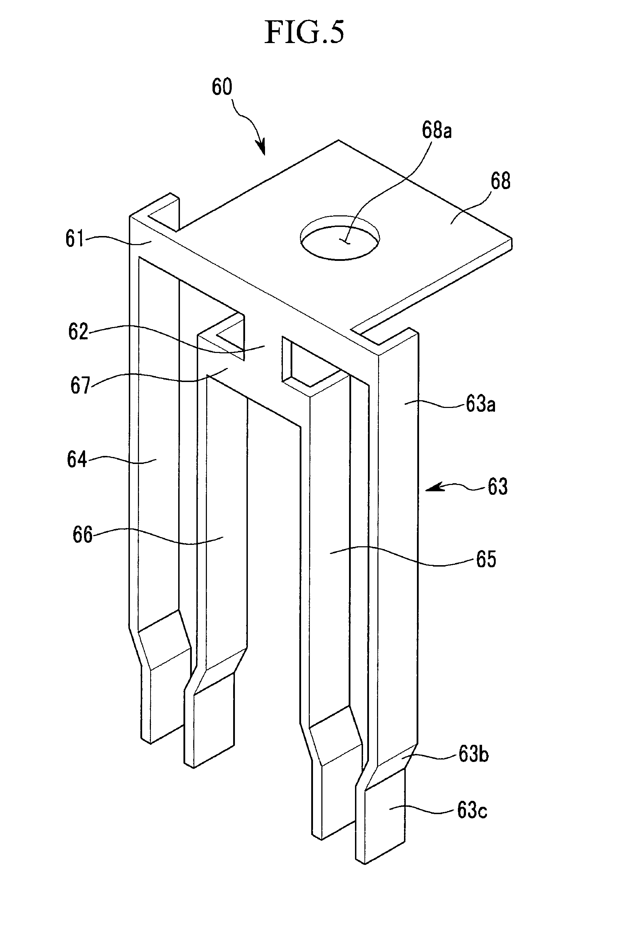

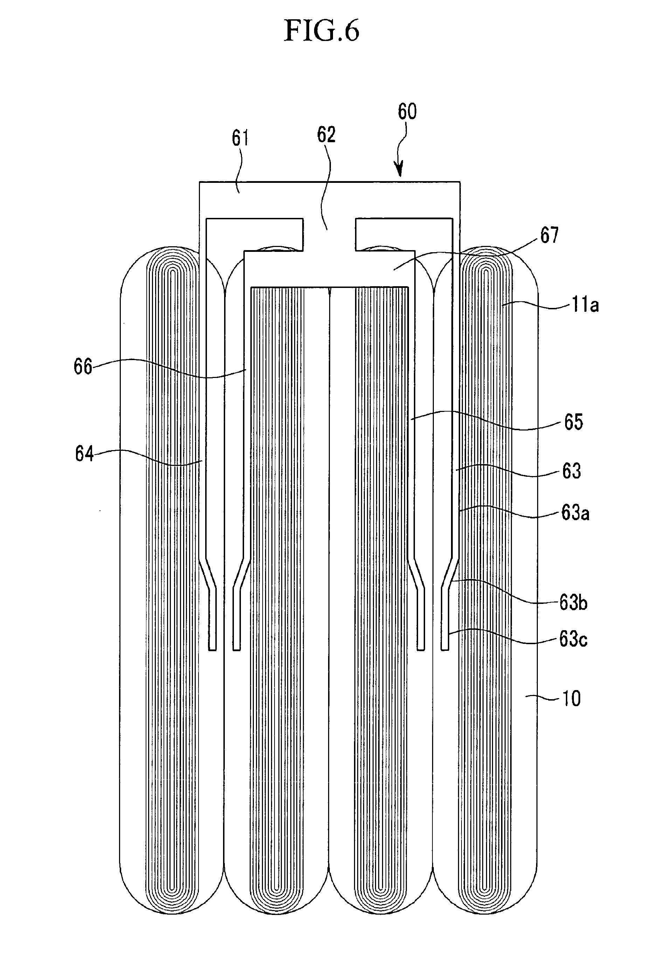

FIG. 5 is a perspective view of a current collecting lead tab according to a second exemplary embodiment of the present invention, and FIG. 6 is a side view showing a state that the current collecting lead tab is attached to electrode assemblies according to the second exemplary embodiment of the present invention.

With reference to Figs. 5 and 6, a current collecting lead tab 60 includes a terminal junction part 68 fixed to the terminal and a plurality of electrode assembly junction parts 63, 64, 65, and 66 formed to downwardly extend from the terminal junction part 68 and inserted between the electrode assemblies 10.

The rechargeable battery according to the present exemplary embodiment includes four electrode assemblies 10, and the four electrode assemblies 10 are stacked and arranged to be parallel to each other.

The electrode assembly junction parts 63, 64, 65, and 66 include a first electrode assembly junction part 63, a second electrode assembly junction part 64, a third electrode assembly junction part 65, and a fourth electrode assembly junction part 66. The four electrode assembly junction parts 63, 64, 65, and 66 are disposed to be parallel to each other.

The terminal junction part 68 has a plate-like shape, is parallel to the cap plate, and includes a terminal hole 68a formed at the center thereof. A lower protrusion of the terminal is inserted into the terminal hole 68a.

A first branch portion 61 is formed to be protruded to an outer side further than the side ends of the terminal junction part 68 under the terminal junction part 68. The first branch portion 61 is formed to be bent toward the bottom from the terminal junction part 68. The first and second electrode assembly junction parts 63 and 64 are formed to be bent from both side ends of the first branch portion 61. The first and second electrode assembly junction parts 63 and 64 are bent toward the center of the electrode assemblies 10 and extend from the first branch portion 61 toward the lower end of the electrode assemblies 10.

A connection plate 62 is formed to be continued from the first branch portion 61 toward the bottom of the case, and a second branch portion 67 is formed to be protruded to an outer side further than the side ends of the connection plate 62 under the connection plate 62. The third and fourth electrode assembly junction parts 65 and 66 are formed at both side ends of the second branch portion 67. The third and fourth electrode assembly junction parts 65 and 66 are bent toward the center of the electrode assemblies 10, and continued from the second branch portion 67 toward the lower end of the electrode assemblies 10.

The connection plate 62 is disposed between the first and second electrode junction parts 63 and 64, and accordingly, the third and fourth electrode assembly junction parts 65 and 66 are disposed between the first and second electrode assembly junction parts 63 and 64.

Because the electrode assembly junction parts 63, 64, 65, and 66 are formed to be bent, they are formed to be parallel to each other and disposed to be parallel to the positive uncoated region 11 a so as to be bonded to the positive uncoated region 11 a through ultrasonic welding.

The four electrode assemblies 10 are disposed to overlap with each other, and the uncoated region is formed at both ends of the electrode assemblies 10. The positive uncoated regions 11 a are formed to have a thickness smaller than that of coated regions with an active material coated thereon, forming a space between the positive uncoated regions 11 a. The electrode assembly junction parts 53 and 54 are inserted and installed in the space.

The first and third electrode junction parts 63 and 65 are inserted in a space between positive uncoated regions 11 a positioned at one edge, and the second and fourth electrode assembly junction parts 64 and 66 are inserted in a space between the positive uncoated regions 11 a positioned at the other edge.

The first and second electrode assembly junction parts 63 and 64 have the same shape, and the third and fourth junction parts 65 and 66 have the same shape as that of the first and second electrode assembly junction parts 63 and 64 except that they are formed to be shorter. The lower ends of the first and second electrode assembly junction parts 63 and 64 are positioned at the same region as that of the lower ends of the third and fourth electrode assembly junction parts 65 and 66.

Thus, a description of the first electrode assembly junction part 63 will replace a description of the other electrode assembly junction parts 64, 65, and 66.

The first electrode assembly junction part 63 includes a welded bar 63a, a bent bar 63b bent toward the boundary between the electrode assemblies so as to be sloped at the center of the electrode assemblies, and an insertion tip 63c formed at the end of the bent bar 63b. The bent bar 63b is formed to be sloped with respect to the welded bar 63a, allowing the insertion tip 63c to be separated from the positive uncoated region 11 a, and accordingly, the electrode assembly junction parts 63, 65, 65, and 66 can be easily inserted between the electrode assemblies 10.

Also, although the welded bar 63a is formed to be tightly attached to the positive uncoated region 11 a, because the insertion tip 63c is separated from the positive uncoated region 11 a, the current collecting lead tab 60 can be easily inserted initially between the positive uncoated regions 11 a, and during the insertion process, the welded bar 63a is tightly attached to the positive uncoated region 11 a.

In this manner, according to the present exemplary embodiment, the four electrode assemblies 10 and the positive terminal 21 can be electrically connected by using the single current collecting lead tab 60, and accordingly, the current collecting lead tab 60 can be easily installed and assembled, improving the productivity. Also, because current collected at the respective electrode assemblies 10 is transferred to the terminal through different paths, the current can be stably transferred without the bottlenecks. Thus, an increase in resistance otherwise caused by a current concentration at the current collecting lead tab 60 can be prevented.

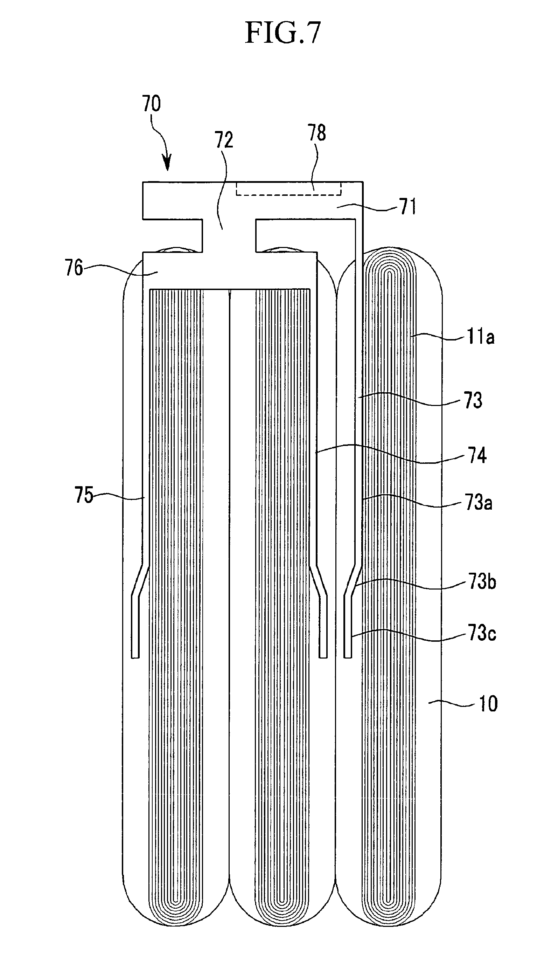

FIG. 7 is a side view showing a state that a current collecting lead tab is installed at electrode assemblies according to a third exemplary embodiment of the present invention.

With reference to FIG. 7, a current collecting lead tab 70 according to the present exemplary embodiment includes a terminal junction part 78 attached to the terminal through welding and a plurality of electrode assembly junction parts 73, 74, and 75 formed to be continued downwardly from the terminal junction part 78 and inserted between the electrode assemblies 10.

A rechargeable battery according to the present exemplary embodiment includes three electrode assemblies 10, and the three electrode assemblies are stacked and arranged to be parallel to each other.

The terminal junction part 78 is formed to be parallel to the cap plate and fixed to the lower end of the terminal through welding. The electrode assembly junction parts 73, 74, and 75 include first, second and third electrode assembly junction parts 73, 74, and 75, and the three electrode assembly junction parts 73, 74, and 75 are disposed to be parallel to each other. A first branch portion 71 formed to be protruded to an outer side further than the side end of the terminal junction part 78 under the terminal junction part 78. The first branch portion 71 is bent from the terminal junction part 78 toward the bottom of the case.

The first electrode assembly junction part 73 is formed to be bent from one side end of the first branch portion 71. The first electrode assembly junction part 73 is bent from the side end of the first branch portion 71 at a right angle, and formed to be parallel to a flat face of the electrode assembly 10.

A connection plate 72 is formed to be downwardly continued from the first branch portion 71 toward the bottom of the case, and a second branch portion 76 is formed to be protruded to an outer side further than the side end of the connection plate 72 under the connection plate 72. The second and third electrode assembly junction parts 74 and 75 are formed at both side ends of the second branch portion 76. The second and third electrode assembly junction parts 74 and 75 are bent from the second branch portion 76 at a right angle so as to be parallel to the flat faces of the electrode assemblies 10, and are formed to be continued from the second branch portion 76 toward the lower ends of the electrode assemblies 10.

The first electrode assembly junction part 73 has the same configuration as that of second and third electrode assembly junction parts 74 and 75, except that it is formed to be longer than the second and third electrode assembly junction parts 74 and 75. The lower end of the first electrode assembly junction part 73 is positioned at the same region as that of the lower ends of the second and third electrode assembly junction parts 74 and 75.

When the respective electrode assembly junction parts 73, 74, and 75 are formed to be bent, they are disposed to be parallel to the positive uncoated regions 11a of the electrode assemblies 10 and bonded to the positive uncoated regions 11a through ultrasonic welding.

The three electrode assemblies 10 are disposed to overlap with each other, and a space is formed between the positive uncoated regions 11 a. In this case, because three electrode assemblies 10 are disposed to overlap with each other, two spaces are formed. The first and second electrode assembly junction parts 73 and 74 are inserted into one space, and the third electrode assembly junction part 75 is bonded to an outer surface of the positive uncoated region 11a of the electrode assembly 10 disposed at the outer side.

The first electrode assembly junction part 73 includes a welded bar 73 attached to the positive uncoated region 11 a through welding, a bent bar 73b formed to be bent to an outer side of the electrode assembly 10, and an insertion tip 73c formed at the end of the bent bar 73. Accordingly, the current collecting lead tab 70 can be easily inserted between the electrode assemblies.

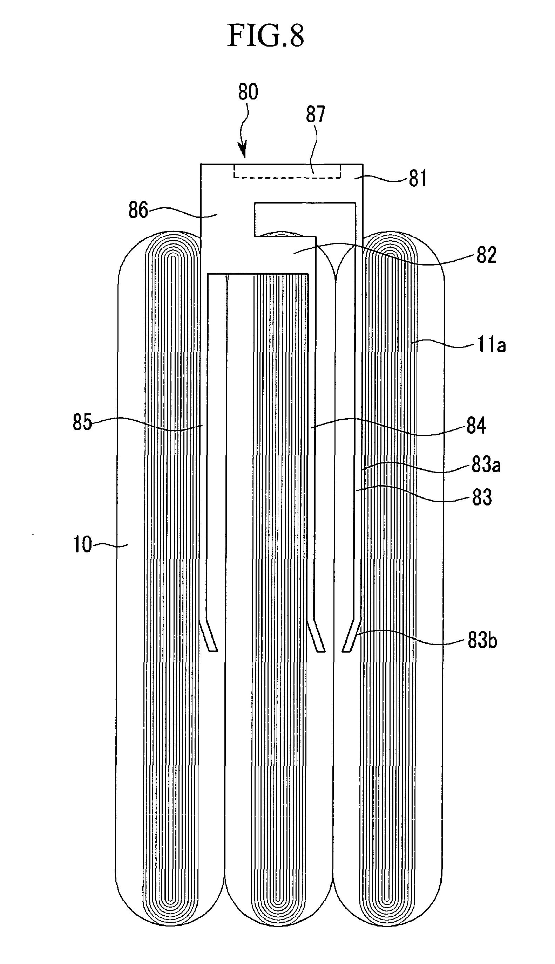

FIG. 8 is a side view showing a state that a current collecting lead tab is installed at electrode assemblies according to a fourth exemplary embodiment of the present invention.

With reference to FIG. 8, the current collecting lead tab 80 according to the present exemplary embodiment includes a terminal junction part 87 attached to the terminal through welding and a plurality of electrode assembly junction parts 83, 84, and 85 formed to be downwardly continued from the terminal junction part 87 and inserted between the electrode assemblies 10.

A rechargeable battery according to the present exemplary embodiment includes three electrode assemblies 10, and the three electrode assemblies 10 are stacked and arranged in parallel.

The terminal junction part 87 is formed to be parallel to the cap plate and fixed to a lower end of the terminal through welding. The electrode assembly junction parts 83, 84, and 85 include first, second, and third electrode assembly junction parts 83, 84, and 85, and the three electrode assembly junction parts 83, 84, and 85 are disposed to be parallel. A first branch portion 81 is formed to be protruded to an outer side further than the side end of the terminal junction part 87 under the terminal junction part 87. The first branch portion 81 is bent from the terminal junction part 87 toward the bottom of the case.

The first electrode assembly junction part 83 is formed to be bent from one side end of the first branch portion 81, and the third electrode assembly junction part 85 is formed to be bent from the other side end of the first branch portion 81. The first and third electrode assembly junction parts 83 and 85 are bent from the side ends of the first branch portion 81, and are formed to be parallel to the flat faces of the electrode assemblies 10.

A connection plate 86 is formed to be downwardly continued toward the bottom of the case under the first branch portion 81, and a second branch portion 82 is formed to be protruded to an outer side further than one end of the connection plate 86 under the connection plate 86. The second electrode assembly junction part 84 is formed at one side end of the second branch portion 82.

Because the three electrode assemblies 10 are disposed to overlap with each other, two spaces are formed between the positive uncoated regions 11 a. The first and second electrode assembly junction parts 83 and 84 are inserted into one space, and the third electrode assembly junction part 85 is inserted into the other space.

The first electrode assembly junction part 83 includes a welded bar 83a attached to the positive uncoated region 11 a through welding and having a rectangular bar shape and a bent bar 83b formed to be bent to an outer side of the electrode assembly 10 from a lower portion of the welded bar 83. The bent bar 83b is formed to be sloped with respect to the welded bar 83a, and a lower end of the bent bar 83b is separated from the electrode assembly 10. Accordingly, the current collecting lead tab 80 can be easily inserted between the electrode assemblies 10.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (100) comprising:
a plurality of electrode assemblies (10);
a case (34) accommodating the plurality of electrode assemblies (10);
at least one electrode terminal (21, 22) being electrically connected to the plurality of electrode assemblies (10) by a lead tab (50, 60, 70, 80), the lead tab (50, 60, 70, 80) comprising:
a terminal junction part (51);
at least one electrode assembly junction pair (53, 54; 63, 65; 64, 66) comprising a first electrode assembly junction part (53) and a second electrode assembly junction part (54); each of the electrode assembly junction parts (53, 54) being electrically connected to the terminal junction part (51);
**characterized in that**
each of the electrode assembly junction parts (53, 54) comprises a bar portion (53a) and a bent portion (53b);
wherein the bar portion (53a) comprises a planar surface extending from a first end which faces towards the terminal junction part (51) to a second end which faces away from the terminal junction part (51), wherein the planar surface of the bar portion (53a) of the first electrode assembly junction part (53) is arranged parallel to the planar surface of the bar portion of the second electrode assembly junction part (54), and
wherein the bent portion (53b) is connected to the second end of the bar portion (53a) and the bent portion (53b) of the first electrode assembly junction part (53) protrudes towards the second electrode assembly junction part (54) and the bent portion of the second electrode assembly junction part (54) protrudes towards the first electrode assembly junction part (53).

2. The rechargeable battery (100) of claim 1, wherein the electrode assembly junction part (53, 54) further comprises an insertion tip (53c), the insertion tip (53c) being connected to the bent portion (53b) and facing away from the terminal junction part (51).

3. The rechargeable battery (100) of claim 2, wherein the insertion tip (53c) comprises a planar surface which is arranged parallel to the planar surface of the bar portion (53a).

4. The rechargeable battery (100) according to any one of the preceding claims, further comprising a single electrode assembly junction part (75, 85) comprising a bar portion and a bent portion;
wherein the bar portion of the single electrode assembly junction part (75, 85) comprises a planar surface extending from a first end which faces towards the terminal junction part (51) to a second end which faces away from the terminal junction part (51), and
wherein the bent portion (53b) of the single electrode assembly junction part (75, 85) is connected to the second end of the bar portion of the single electrode assembly junction part (75, 85) and the distance between the bar portion of the single electrode assembly junction part (75, 85) and the bar portion of an adjacent electrode assembly junction part (74, 84) is greater than the distance between the bar portions of the at least one electrode assembly junction pair (73, 74; 83, 84).

5. The rechargeable battery (100) according to any one of the preceding claims, wherein each of the electrode assembly junction parts (53, 54, 63, 64, 65, 66, 73, 74, 83, 84) comprises a longish stripe-like shape.

6. The rechargeable battery (100) according to any one of the preceding claims, wherein at least one of the bent portions (53b, 63b, 73b, 83b) comprises a planar surface, the planar surface of the at least one bent portion (53b, 63b, 73b, 83b) being inclined with respect to the planar surface of the corresponding bar portion (53a, 63a, 73a, 83a), wherein an angle of inclination ranges between 15° and 45°.

7. The rechargeable battery (100) according to any one of the preceding claims, wherein the terminal junction part (51) comprises a terminal through hole (51 a).

8. The rechargeable battery (100) according to any one of the preceding claims, further comprising a connection plate (52) extending from an edge of the terminal junction part (51) towards the electrode assembly junction parts (53, 54).

9. The rechargeable battery (100) according to claim 8, wherein at least one electrode assembly junction pair (53, 54) comprises a branch portion (56) being connected to and extending from the connection plate (52) to side portions of the connection plate (52) in a direction extending parallel to the edge of the terminal junction part (51).

10. The rechargeable battery (100) according to any one of the preceding claims, wherein the distance from the first end of the bar portion (53a) to the second end of the bar portion (53a) is greater than a maximum extension of the bent portion (53b) and/or wherein the distance from the first end of the bar portion (53a) to the second end of the bar portion (53a) is greater than a maximum extension of the insertion tip (53c).

11. The rechargeable battery (100) according to any one of the claims 2 to 10, wherein a maximum extension of the bent portion (53b) is smaller than a maximum extension of the insertion tip (53c).

12. The rechargeable battery (100) according to any one of the preceding claims, wherein the planar surface of the first electrode assembly junction part (53) is arranged parallel to the planar surface of the second electrode assembly junction part (54) and/or wherein the planar surface of the single electrode assembly junction part (75, 85) is arranged parallel to the planar surfaces of the bar portions (73a, 83a) of the at least one electrode assembly junction pair (73, 74; 83, 84).

13. The rechargeable battery (100) according to any one of the preceding claims, wherein each of the plurality of electrode assemblies (100) comprises a first electrode (11), a second electrode (12) and a separator (13) disposed between the first electrode (11) and the second electrode (12), each of the first electrode (11) and the second electrode (12) comprising a coated region with an active material and an uncoated region (11 a, 12a) which is not coated with an active material, wherein the electrode assembly junction parts (53, 54) of a first lead tab (50) are directly connected to the uncoated region (11a) of the first electrode (11) of the electrode assemblies (10) and the electrode assembly junction parts of a second lead tab (40) are directly connected to the uncoated region (12a) of the second electrode (12) of the electrode assemblies (10).

14. The rechargeable battery (100) according to any one of the preceding claims, wherein the electrode assembly junction parts (53, 54) of the at least one lead tab (40, 50) are welded to the corresponding uncoated region (11a, 12a) of the electrode assemblies (10).

15. The rechargeable battery (100) according to any one of the preceding claims, wherein the terminal junction part (51) is directly connected to the at least one electrode terminal (21, 22).

## Patentansprüche

1. Wiederaufladbare Batterie (100), aufweisend:
eine Vielzahl von Elektrodenanordnungen (10);
ein Gehäuse (34), das die Vielzahl der Elektrodenanordnungen (10) beherbergt;
zumindest einen Elektrodenanschluss (21, 22), der durch einen Leitungsstreifen (50, 60, 70, 80) mit der Vielzahl der Elektrodenanordnungen (10) elektrisch verbunden ist, wobei der Leitungsstreifen (50, 60, 70, 80) aufweist:
einen Anschlussverbindungsteil (51);
zumindest ein Elektrodenanordnungs-Verbindungspaar (53, 54; 63, 65; 64, 66), das einen ersten Elektrodenanordnungs-Verbindungsteil (53) und einen zweiten Elektrodenanordnungs-Verbindungsteil (54) aufweist; wobei jeder der Elektrodenanordnungs-Verbindungsteile (53, 54) mit dem Anschlussverbindungsteil (51) elektrisch verbunden ist;
**dadurch gekennzeichnet, dass**
jeder der Elektrodenanordnungs-Verbindungsteile (53, 54) einen Stangenabschnitt (53a) und einen gebogenen Abschnitt (53b) aufweist;
wobei der Stangenabschnitt (53a) eine ebene Oberfläche aufweist, die sich von einem ersten Ende, das dem Anschlussverbindungsteil (51) zugewandt ist, zu einem zweiten Ende erstreckt, das vom Anschlussverbindungsteil (51) abgewandt ist, wobei die ebene Oberfläche des Stangenabschnitts (53a) des ersten Elektrodenanordnungs-Verbindungsteils (53) parallel zur ebenen Oberfläche des Stangenabschnitts des zweiten Elektrodenanordnungs-Verbindungsteils (54) angeordnet ist, und
wobei der gebogene Abschnitt (53b) mit dem zweiten Ende des Stangenabschnitts (53a) verbunden ist und der gebogene Abschnitt (53b) des ersten Elektrodenanordnungs-Verbindungsteils (53) zum zweiten Elektrodenanordnungs-Verbindungsteil (54) hin vorragt und der gebogene Abschnitt des zweiten Elektrodenanordnungs-Verbindungsteils (54) zum ersten Elektrodenanordnungs-Verbindungsteil (53) hin vorragt.

2. Wiederaufladbare Batterie (100) nach Anspruch 1, wobei der Elektrodenanordnungs-Verbindungsteil (53, 54) weiterhin eine Einführspitze (53c) aufweist, wobei die Einführspitze (53c) mit dem gebogenen Abschnitt (53b) verbunden ist und vom Anschlussverbindungsteil (51) abgewandt ist.

3. Wiederaufladbare Batterie (100) nach Anspruch 2, wobei die Einführspitze (53c) eine ebene Oberfläche aufweist, die parallel zur ebenen Oberfläche des Stangenabschnitts (53a) angeordnet ist.

4. Wiederaufladbare Batterie (100) nach einem der vorhergehenden Ansprüche, weiterhin aufweisend einen einzelnen Elektrodenanordnungs-Verbindungsteil (75, 85), der einen Stangenabschnitt und einen gebogenen Abschnitt aufweist;
wobei der Stangenabschnitt des einzelnen Elektrodenanordnungs-Verbindungsteils (75, 85) eine ebene Oberfläche aufweist, die sich von einem ersten Ende, das dem Anschlussverbindungsteil (51) zugewandt ist, zu einem zweiten Ende erstreckt, das vom Anschlussverbindungsteil (51) abgewandt ist, und
wobei der gebogene Abschnitt (53b) des einzelnen Elektrodenanordnungs-Verbindungsteils (75, 85) mit dem zweiten Ende des Stangenabschnitts des einzelnen Elektrodenanordnungs-Verbindungsteils (75, 85) verbunden ist und der Abstand zwischen dem Stangenabschnitt des einzelnen Elektrodenanordnungs-Verbindungsteils (75, 85) und dem Stangenabschnitt eines benachbarten Elektrodenanordnungs-Verbindungsteils (74, 84) größer ist als der Abstand zwischen den Stangenabschnitten des zumindest einen Elektrodenanordnungs-Verbindungspaars (73, 74; 83, 84).

5. Wiederaufladbare Batterie (100) nach einem der vorhergehenden Ansprüche, wobei jeder der Elektrodenanordnungs-Verbindungsteile (53, 54, 63, 64, 65, 66, 73, 74, 83, 84) eine längliche Streifenform aufweist.

6. Wiederaufladbare Batterie (100) nach einem der vorhergehenden Ansprüche, wobei zumindest einer der gebogenen Abschnitte (53b, 63b, 73b, 83b) eine ebene Oberfläche aufweist, wobei die ebene Oberfläche des zumindest einen gebogenen Abschnitts (53b, 63b, 73b, 83b) bezüglich der ebenen Oberfläche des korrespondierenden Stangenabschnitts (53a, 63a, 73a, 83a) geneigt ist, wobei ein Neigungswinkel im Bereich zwischen 15° und 45° liegt.

7. Wiederaufladbare Batterie (100) nach einem der vorhergehenden Ansprüche, wobei der Anschlussverbindungsteil (51) ein Anschluss-Durchgangsloch (51a) aufweist.

8. Wiederaufladbare Batterie (100) nach einem der vorhergehenden Ansprüche, weiterhin aufweisend eine Verbindungsplatte (52), die sich von einem Rand des Anschlussverbindungsteils (51) zu den Elektrodenanordnungs-Verbindungsteilen (53, 54) erstreckt.

9. Wiederaufladbare Batterie (100) nach Anspruch 8, wobei zumindest ein Elektrodenanordnungs-Verbindungspaar (53, 54) einen Zweigabschnitt (56) aufweist, der mit der Verbindungsplatte (52) verbunden ist und sich von der Verbindungsplatte (52) zu Seitenabschnitten der Verbindungsplatte (52) in eine Richtung erstreckt, die sich parallel zum Rand des Anschlussverbindungsteils (51) erstreckt.

10. Wiederaufladbare Batterie (100) nach einem der vorhergehenden Ansprüche, wobei der Abstand vom ersten Ende des Stangenabschnitts (53a) zum zweiten Ende des Stangenabschnitts (53a) größer ist als eine maximale Ausdehnung des gebogenen Abschnitts (53b) und/oder wobei der Abstand vom ersten Ende des Stangenabschnitts (53a) zum zweiten Ende des Stangenabschnitts (53a) größer ist als eine maximale Ausdehnung der Einführspitze (53c).

11. Wiederaufladbare Batterie (100) nach einem der Ansprüche 2 bis 10, wobei eine maximale Ausdehnung des gebogenen Abschnitts (53b) kleiner ist als eine maximale Ausdehnung der Einführspitze (53c).

12. Wiederaufladbare Batterie (100) nach einem der vorhergehenden Ansprüche, wobei die ebene Oberfläche des ersten Elektrodenanordnungs-Verbindungsteils (53) parallel zur ebenen Oberfläche des zweiten Elektrodenanordnungs-Verbindungsteils (54) angeordnet ist, und/oder wobei die ebene Oberfläche des einzelnen Elektrodenanordnungs-Verbindungsteils (75, 85) parallel zu den ebenen Oberflächen der Stangenabschnitte (73a, 83a) des zumindest einen Elektrodenanordnungs-Verbindungspaars (73, 74; 83, 84) angeordnet ist.

13. Wiederaufladbare Batterie (100) nach einem der vorhergehenden Ansprüche, wobei jede aus der Vielzahl der Elektrodenanordnungen (100) eine erste Elektrode (11), eine zweite Elektrode (12) und einen Separator (13) aufweist, der zwischen der ersten Elektrode (11) und der zweiten Elektrode (12) angeordnet ist, wobei sowohl die erste Elektrode (11) als auch die zweite Elektrode (12) einen beschichteten Bereich mit einem aktiven Material und einen unbeschichteten Bereich (11a, 12a), der nicht mit einem aktiven Material beschichtet ist, aufweisen, wobei die Elektrodenanordnungs-Verbindungsteile (53, 54) eines ersten Leitungsstreifens (50) direkt mit dem unbeschichteten Bereich (11a) der ersten Elektrode (11) der Elektrodenanordnungen (10) verbunden sind und die Elektrodenanordnungs-Verbindungsteile eines zweiten Leitungsstreifens (40) direkt mit dem unbeschichteten Bereich (12a) der zweiten Elektrode (12) der Elektrodenanordnungen (10) verbunden sind.

14. Wiederaufladbare Batterie (100) nach einem der vorhergehenden Ansprüche, wobei die Elektrodenanordnungs-Verbindungsteile (53, 54) des zumindest einen Leitungsstreifens (40, 50) mit dem korrespondierenden unbeschichteten Bereich (11a, 12a) der Elektrodenanordnungen (10) verschweißt sind.

15. Wiederaufladbare Batterie (100) nach einem der vorhergehenden Ansprüche, wobei der Anschlussverbindungsteil (51) direkt mit dem zumindest einen Elektrodenanschluss (21, 22) verbunden ist.

## Revendications

1. Batterie rechargeable (100) comprenant :
une pluralité d'ensembles électrodes (10) ;
un boîtier (34) logeant la pluralité d'ensembles électrodes (10) ;
au moins une borne d'électrode (21, 22) étant reliée électriquement à la pluralité d'ensembles électrodes (10) par une patte de connecteur (50, 60, 70, 80), la patte de connecteur (50, 60, 70, 80) comprenant :
une partie de jonction de borne (51) ;
au moins une paire de jonctions d'ensemble électrode (53, 54 ; 63, 65 ; 64, 66) comprenant une première partie de jonction d'ensemble électrode (53) et une seconde partie de jonction d'ensemble électrode (54) ; chacune des parties de jonction d'ensemble électrode (53, 54) étant reliée électriquement à la partie jonction de borne (51) ;
caractérisée en ce qui :
chacune des parties de jonction d'ensemble électrode (53, 54) comprend une portion de barrette (53a) et une portion coudée (53b) ;
la portion de barrette (53a) comprenant une surface plane s'étendant d'une première extrémité qui est tournée vers la partie de jonction de borne (51) à une seconde extrémité qui est tournée à l'opposé de la partie de jonction de borne (51), la surface plane de la portion de barrette (53a) de la première partie de jonction d'ensemble électrode (53) étant agencée parallèlement à la surface plane de la portion de barrette de la seconde partie de jonction d'ensemble électrode (54), et
la portion coudée (53b) étant reliée à la seconde extrémité de la portion de barrette (53a) et la portion coudée (53b) de la première partie de jonction d'ensemble électrode (53) faisant saillie vers la seconde partie de jonction d'ensemble électrode (54) et la portion coudée de la seconde partie de jonction d'ensemble électrode (54) faisant saillie vers la première partie de jonction d'ensemble électrode (53).

2. Batterie rechargeable (100) selon la revendication 1, dans laquelle la partie de jonction d'ensemble électrode (53, 54) comprend, en outre, une pointe d'insertion (53c), la pointe d'insertion (53c) étant reliée à la portion coudée (53b) et étant tournée à l'écart de la partie de jonction de borne (51).

3. Batterie rechargeable (100) selon la revendication 2, dans laquelle la pointe d'insertion (53c) comprend une surface plane qui est agencée parallèlement à la surface plane de la portion de barrette (53a).

4. Batterie rechargeable (100) selon l'une quelconque des revendications précédentes, comprenant, en outre, une partie de jonction d'ensemble électrode unique (75, 85) comprenant une portion de barrette et une portion coudée ;
la portion de barrette de la partie de jonction d'ensemble électrode unique (75, 85) comprenant une surface plane s'étendant d'une première extrémité qui est tournée vers la partie de jonction de borne (51) à une seconde extrémité qui est tournée à l'écart de la partie de jonction de borne (51), et
la portion coudée (53b) de la partie de jonction d'ensemble électrode unique (75, 85) étant reliée à la seconde extrémité de la portion de barrette de la partie de jonction d'ensemble électrode unique (75, 85) et la distance entre la portion de barrette de la partie de jonction d'ensemble électrode unique (75, 85) et la portion de barrette d'une partie de jonction d'ensemble électrode (74, 84) adjacente étant supérieure à la distance entre les portions de barrettes de l'au moins une paire de jonctions d'ensemble électrode (73, 74 ; 83, 84).

5. Batterie rechargeable (100) selon l'une quelconque des revendications précédentes, dans laquelle chacune des parties de jonction d'ensemble électrode (53, 54, 63, 64, 65, 66, 73, 74, 83, 84) a une forme de bande plus ou moins longue.

6. Batterie rechargeable (100) selon l'une quelconque des revendications précédentes, dans laquelle au moins l'une des portions coudées (53b, 63b, 73b, 83b) comprend une surface plane, la surface plane de l'au moins une portion coudée (53b, 63b, 73b, 83b) étant inclinée par rapport à la surface plane de la portion de barrette (53a, 63a, 73a, 83a) correspondante, un angle d'inclinaison étant compris entre 15° et 45°.

7. Batterie rechargeable (100) selon l'une quelconque des revendications précédentes, dans laquelle la partie de jonction de borne (51) comprend un trou traversant de borne (51a).

8. Batterie rechargeable (100) selon l'une quelconque des revendications précédentes, comprenant, en outre, une plaque de connexion (52) s'étendant depuis un bord de la partie de jonction de borne (51) vers les parties de jonction d'ensemble électrode (53, 54).

9. Batterie rechargeable (100) selon la revendication 8, dans laquelle au moins une paire de jonctions d'ensemble électrode (53, 54) comprend une portion de ramification (56) étant reliée à, et s'étendant depuis, la plaque de connexion (52) jusqu'aux portions latérales de la plaque de connexion (52) dans une direction s'étendant parallèlement au bord de la partie de jonction de borne (51).

10. Batterie rechargeable (100) selon l'une quelconque des revendications précédentes, dans laquelle la distance de la première extrémité de la portion de barrette (53a) à la seconde extrémité de la portion de barrette (53a) est supérieure à une extension maximale de la portion coudée (53b) et/ou la distance de la première extrémité de la portion de barrette (53a) à la seconde extrémité de la portion de barrette (53a) est supérieure à une extension maximale de la pointe d'insertion (53c).

11. Batterie rechargeable (100) selon l'une quelconque des revendications 2 à 10, dans laquelle une extension maximale de la portion coudée (53b) est plus petite qu'une extension maximale de la pointe d'insertion (53c).

12. Batterie rechargeable (100) selon l'une quelconque des revendications précédentes, dans laquelle la surface plane de la première partie de jonction d'ensemble électrode (53) est agencée parallèlement à la surface plane de la seconde partie de jonction d'ensemble électrode (54) et/ou la surface plane de la partie de jonction d'ensemble électrode unique (75, 85) est agencée parallèlement aux surfaces planes des portions de barrettes (73a, 83a) de l'au moins une paire de jonctions d'ensemble électrode (73, 74 ; 83, 84).

13. Batterie rechargeable (100) selon l'une quelconque des revendications précédentes, dans laquelle chaque ensemble électrode de la pluralité d'ensembles électrodes (100) comprend une première électrode (11), une seconde électrode (12) et un séparateur (13) disposé entre la première électrode (11) et la seconde électrode (12), la première électrode (11) et la seconde électrode (12) comprenant chacune une région revêtue avec une matière active et une région non revêtue (11a, 12a) qui n'est pas revêtue d'une matière active, les parties de jonction d'ensemble électrode (53, 54) d'une première patte de connecteur (50) étant directement reliées à la région non revêtue (11a) de la première électrode (11) des ensembles électrodes (10), et les parties de jonction d'ensemble électrode d'une seconde patte de connecteur (40) étant directement reliées à la région non revêtue (12a) de la seconde électrode (12) des ensembles électrodes (10).

14. Batterie rechargeable (100) selon l'une quelconque des revendications précédentes, dans laquelle les parties de jonction d'ensemble électrode (53, 54) de l'au moins une patte de connecteur (40, 50) sont soudées à la région non revêtue (11a, 12a) correspondante des ensembles électrodes (10).

15. Batterie rechargeable (100) selon l'une quelconque des revendications précédentes, dans laquelle la partie de jonction de borne (51) est directement reliée à l'au moins une borne d'électrode (21, 22).
